# EUROPEAN PATENT APPLICATION

(11) **EP 4 385 324 A1**
(43) Date of publication of application: **19.06.2024**
(21) Application number: 22855871.4
(22) Date of filing: 08.08.2022
(51) Int. Cl.: A01N 25/04, A01N 37/34, A01N 43/40, A01N 43/70, A01N 47/06, A01N 47/36, A01P 13/00, B65D 77/00, B65D 85/82

(54) **METHOD FOR PREVENTING DEFORMATION OF PLASTIC PESTICIDE CONTAINER**

(30) Priority: 12.08.2021 JP 2021131666
(71) Applicant: Ishihara Sangyo Kaisha, Ltd., Osaka-shi, Osaka 550-0002 (JP)
(72) Inventor: KOBAYASHI Yusuke, Osaka-shi, Osaka 550-0002 (JP)
(74) Representative: Wächtershäuser & Hartz Patentanwaltspartnerschaft mbB
(86) International application number: PCT/JP2022/030312
(87) International publication number: WO 2023/017809

(57) **Abstract**

An agrochemical oil-based suspension is a product commonly used among liquid agrochemical products, and if a resin-made agrochemical container is employed as a container in which the agrochemical oil-based suspension is to be filled, the container may be deformed or broken during storage or shipping.

With focus on use of a specific antioxidant, the present invention provides a method for preventing deformation of a resin-made agrochemical container by preparing a chemically stable agrochemical oil-based suspension having oxidation of an oil component in the suspension suppressed, and filling the suspension in the resin-made agrochemical container.

## Description

### TECHNICAL FIELD

The present invention relates to a method for preventing deformation of a resin-made agrochemical container filled with an agrochemical oil-based suspension, and an agrochemical oil-based suspension used for the method.

### BACKGROUND ART

As containers for agrochemical liquid products, conventionally, resin-made containers excellent in easy processability, lightweight properties, gas barrier properties, and convenience such that they are not easily broken like glass bottles, have been widely used. Among agrochemical liquid products, oil-based suspensions are a product having an agrochemical active ingredient dispersed in an oil component, and since they are excellent in adhesion to and penetration into crop plants by the action of a surfactant added for the purpose of uniformly dispersing the oil component in a spray liquid, they do not require addition of a spreader into the spray liquid, and they are commonly used among liquid agrochemical products.

Patent Document 1 describes a method of reducing problems of neck-in during storage and shipping of industrial products such as a fuel and a lubricant, by using a fungicidal composition containing a formaldehyde doner compound and an anti-oxidant selected from a gallic acid ester, a phenol derivative, L-ascorbic acid and its salt and a derivative thereof, and tocopherol and a derivative thereof. However, Patent Document 1 does not describe a resin-made container filled with an agrochemical oil-based suspension.

Patent Document 2 describes a method of preventing deformation of a plastic container when stored as filled with a liquid product, by keeping the dissolved oxygen concentration in the liquid product to be 30 ppm or less, and as a specific method of decreasing the dissolved oxygen concentration, it describes a method of blowing an inert gas such as a nitrogen gas into the liquid product, a method of heating the liquid product in an inert gas atmosphere, and a method of reducing the pressure and then returning it to the normal pressure with an inert gas.

Patent Document 3 describes a method for preventing deformation of a container, which comprises deaerating a liquid product containing an organic solvent after prepared, and leaving it at rest or stirring it under normal pressure or elevated pressure so that the gas is re-dissolved in the liquid product and the amount of the gas dissolved in the liquid product is returned to a certain level or higher, to adjust the dissolved gas amount in the liquid product.

Patent Document 4 describes that dibutylhydroxytoluene, butylhydroxyanisole, t-butylhydroquinone or propyl gallate may be added as an oxidant to an agrochemical oil-based suspension, and Patent Document 5 describes that dibutylhydroxytoluene, butylhydroxyanisole or epichlorohydrin may be added as a stabilizer. However, Patent Document 4 and Patent Document 5 do not describe a resin-made container filled with an agrochemical oil-based suspension.

### PRIOR ART DOCUMENTS

### PATENT DOCUMENTS

Patent Document 1: JP-A-2005-82595
Patent Document 2: JP-A-2002-97103
Patent Document 3: JP-A-2017-114506
Patent Document 4: CN 101785455
Patent Document 5: CN 107439578

### DISCLOSURE OF INVENTION

### TECHNICAL PROBLEM

An agrochemical oil-based suspension is, as described above, a product widely used among liquid agrochemical products, and if a resin-made container is employed as a container in which the agrochemical oil-based suspension is to be filled, the container may be deformed or broken during storage or shipping, and its prevention is an object to be achieved.

### SOLUTION TO PROBLEM

The present inventor has conducted extensive studies to achieve the above object and as a result focused on that the oil component in the agrochemical oil-based suspension is oxidized by the action of oxygen, humidity, heat, light, metal ions, microorganism, etc. in the air and the oxidation is accelerated particularly by light and heat, and arrived at the following idea. That is, depending upon the condition of storage of the resin-made container filled with the agrochemical oil-based suspension, oxygen present in a space in the container reacts with the oil component and is consumed, whereby the inside of the container is depressurized, thus leading to deformation or breakage of the container. And, as a means to solve such problems, he has focused on use of a specific antioxidant, and has found that a chemically more stable oil-based suspension can be prepared by suppressing oxidation of the oil component in the agrochemical oil-based suspension, and deformation of a resin-made container can be prevented by filling the container with the oil-based suspension. The present invention has been accomplished on the basis of such a discovery.

### ADVANTAGEOUS EFFECTS OF INVENTION

According to the present invention, provided is a method for preventing deformation of a resin-made agrochemical container filled with an agrochemical oil-based suspension.

### DESCRIPTION OF EMBODIMENTS

The present invention relates to a method for preventing deformation of a resin-made agrochemical container filled with an agrochemical oil-based suspension, wherein the agrochemical oil-based suspension filled in the resin-made agrochemical container contains (1) an agrochemical active ingredient, (2) an oil component and (3) at least one antioxidant selected from the group consisting of a phenol derivative, a gallic acid ester and ethoxyquin.

The present invention further relates to an agrochemical oil-based suspension for preventing deformation of a resin-made agrochemical container, containing (1) an agrochemical active ingredient, (2) an oil component and (3) at least one antioxidant selected from the group consisting of a phenol derivative, a gallic acid ester and ethoxyquin, and having oxidation of the oil component which occurs in the resin-made agrochemical container filled with the agrochemical oil-based suspension suppressed.

In the present invention, deformation of the resin-made agrochemical container means unrestorable collapse, shrinkage, distortion, breakage, crack or the like as compared with a shape of the container when the agrochemical oil-based suspension is filled.

The agrochemical active ingredient in the present invention is not particularly limited so long as it can be formulated into an oil-based suspension and may, for example, be nicosulfuron, flazasulfuron, tolpyralate, tiafenacil, mesotrione, atrazine, bromoxynil, terbuthylazine, acetochlor, metolachlor, chlorfluazuron, fosthiazate, flonicamid, cyclaniliprole, isofetamid, cyazofamid, pyriofenone or fluazinam.

Among them, preferred are nicosulfuron, flazasulfuron, tolpyralate, flonicamid, isofetamid, cyazofamid, pyriofenone and fluazinam, and more preferred are nicosulfuron and tolpyralate.

The oil component in the present invention is not particularly limited so long as it has an unsaturated hydrocarbon as a moiety to react with oxygen in the resin-made agrochemical container after the agrochemical oil-based suspension is filled in the container, and may, for example, be a vegetable oil, an alkyl-esterified vegetable oil, a mineral oil or an aromatic oil, or a mixture thereof.

The vegetable oil or the alkyl-esterified vegetable oil may, for example, be soybean oil, rapeseed oil, tall oil, olive oil, castor oil, papaya oil, camellia oil, coconut oil, palm oil, sesame oil, corn oil, rice bran oil, peanut oil, cottonseed oil, linseed oil, sunflower oil, neem oil or safflower oil, or an alkyl ester oil thereof, and is preferably rapeseed oil, corn oil or soybean oil, or a methyl ester oil thereof.

Further, as the oil component, a fatty acid glyceride may be used. The fatty acid glyceride can be obtained, for example, from a vegetable oil. The number of substitution by the fatty acid is optional, and a monoglyceride, a diglyceride or a triglyceride may be mentioned. A diglyceride or a triglyceride may be substituted by identical or different fatty acids at an optional position, and in the case of substituted by different fatty acids, they may be either an unsaturated fatty acid or a saturated fatty acid. Two or more types of fatty acid glycerides may be used in combination.

The fatty acid may, for example, be α-linolenic acid, linoleic acid, oleic acid, caprylic acid, capric acid, lauric acid, myristic acid, palmitic acid, palmitoleic acid, stearic acid, arachidic acid, eicosenoic acid, behenic acid, erucic acid, lignoceric acid, erucic acid or ricinoleic acid, and is preferably linoleic acid, oleic acid, palmitic acid, stearic acid or erucic acid. Further, an alkyl-esterified fatty acid glyceride having the fatty acid moiety alkyl-esterified is preferred, and a methylated fatty acid glyceride is particularly preferred.

The mineral oil may be a machine oil, a paraffin oil or a naphthene oil, and is preferably a paraffin oil. The mineral oil mainly contains a saturated hydrocarbon, but may include an unsaturated hydrocarbon, and such a mineral oil is covered by the present invention.

The aromatic oil may be solvent naphtha or xylene, and is preferably solvent naphtha.

The antioxidant in the present invention may, for example, be a phenol derivative, a gallic acid ester or ethoxyquin.

The antioxidant, which exerts the desired effect when added into the product, is preferably dissolved in the product, and since the agrochemical oil-based suspension of the present invention is an agrochemical product based on an oil, a lipophilic antioxidant is particularly preferred.

The phenol derivative may, for example, be dibutylhydroxytoluene, butylhydroxyanisole, 2,5-di-tert-amylhydroquinone, 2,5-di-tert-butylhydroquinone, 4,4'-butylidenebis(6-tert-butyl-m-cresol), 4,4'-thiobis(6-tert-butyl-m-cresol) or bis(5-tert-butyl-4-hydroxy-2-methylphenyl)sulfide, and is preferably dibutylhydroxytoluene.

The gallic acid ester may, for example, be methyl gallate, ethyl gallate, 2-hydroxyethyl gallate, propyl gallate, isopropyl gallate or butyl gallate, and is preferably propyl gallate.

The antioxidant is particularly preferably dibutylhydroxytoluene.

The antioxidant in the present invention exerts the desired effect even with a very small addition amount, and in order to suppress deformation of the resin-made agrochemical container over a long period of time, the weight ratio of the antioxidant to the oil component is usually from 0.0001:99.9999 to 30:70, preferably from 0.001:99.999 to 20:80, more preferably from 0.01:99.99 to 15:85.

In the present invention, the resin-made agrochemical container in which the agrochemical oil-based suspension is to be filled is not particularly limited and is preferably a resin-made agrochemical container industrially produced by direct blow molding or stretch blow molding from a material such as a low density polyethylene, a high density polyethylene, a polyvinyl chloride, a polypropylene, a polyamide, a polyethylene terephthalate, a polyvinylidene chloride, a nitril resin, a polycarbonate, a polyacrylate, a polymethylpentene, a polyethylene vinyl alcohol resin or a perfluoroalkoxy fluororesin. The capacity is not particularly limited and may, for example, be 100 mL, 500 mL, 1 L, 5 L, 10 L, 20 L, 200 L or 1000 L, and is preferably 500 mL, 1 L or 5 L.

The blend ratio of the agrochemical active ingredient, the oil component and the antioxidant in the agrochemical oil-based suspension of the present invention can not generally be defined, as it varies depending upon the types of the ingredients, the property, etc., and may be as follows for example.

The ratio of the agrochemical active ingredient is from 0.1 to 80 parts by weight, preferably from 0.5 to 50 parts by weight, further preferably from 2 to 35 parts by weight.

The ratio of the oil component is from 1 to 99 parts by weight, preferably from 5 to 95 parts by weight, more preferably from 15 to 75 parts by weight.

The ratio of the antioxidant is from 0.001 to 10 parts by weight, preferably from 0.01 to 10 parts by weight, more preferably from 0.1 to 3 parts by weight.

The agrochemical oil-based suspension of the present invention may contain a formulation adjuvant such as a surfactant, an anti-freezing agent, an anti-settling agent, a defoaming agent or a solvent properly as the case requires.

The surfactant may, for example, be an anionic surfactant such as a salt of fatty acid, a benzoate, an alkylsulfosuccinate, a dialkylsulfosuccinate, a salt of alkylsulfuric acid ester, an alkyl sulfate, an alkyl diglycol ether sulfate, a salt of alcohol sulfuric acid ester, an alkyl sulfonate, an alkylaryl sulfonate, an alkyldiphenyl ether disulfonate, a polystyrene sulfonate, a salt of alkylphosphoric acid ester, an alkylaryl phosphate, a styrylaryl phosphate, a salt of polyoxyethylene alkyl ether sulfuric acid ester, a polyoxyethylene alkylaryl ether sulfate, a polyoxyethylene styryl aryl ether sulfate, an ammonium salt of polyoxyethylene styryl aryl ether sulfuric acid, a salt of polyoxyethylene alkylaryl ether sulfuric acid ester, a polyoxyethylene alkyl ether phosphate, a salt of polyoxyethylene alkylaryl phosphoric acid ester, a polyoxyethylene styryl aryl ether phosphate or a salt thereof; a nonionic surfactant such as a sorbitan fatty acid ester, a glycerin fatty acid ester, a fatty acid polyglyceride, a fatty acid alcohol polyglycol ether, acetylene glycol, acetylene alcohol, an oxyalkylene block polymer, a polyoxyethylene alkyl ether, a polyoxyethylene alkylaryl ether, a polyoxyethylene styrylaryl ether, a polyoxyethylene allyl phenyl ether, a polyoxyethylene glycol alkyl ether, a polyoxyethylene fatty acid ester, polyoxyethylene sorbitan fatty acid ester, a polyoxyethylene sorbitol fatty acid ester, a polyoxyethylene glycerin fatty acid ester, a polyoxyethylene hydrogenated castor oil, a polyoxyethylene castor oil, a polyoxypropylene fatty acid ester, a polyoxyethylene alkylamine, a polyoxyethylene alkyl ether phosphate, or a polyoxyethylene methylpolysiloxane; or a cationic surfactant such as an alkoxylated fatty acid amine; and two or more of them may be used as mixed as the case requires. The blend ratio of the surfactant is from 0 to 80 parts by weight, preferably from 5 to 70 parts by weight.

The anti-freezing agent is preferably a dihydric alcohol, specifically, an alkylene glycol such as ethylene glycol or propylene glycol, and is preferably propylene glycol. The dihydric alcohol also has, in addition to the anti-freezing effect, a function as a viscosity-reducing agent and reduces the viscosity of the agrochemical oil-based suspension and improves flowability in some cases. The blend ratio of the anti-freezing agent is usually from 2 to 30 parts by weight, preferably from 5 to 10 parts by weight.

The anti-settling agent may, for example, be a natural polysaccharide such as xanthan gum, rhamsan gum, locust bean gum, carrageenan or welan gum; a synthetic polymer such as sodium polyacrylate; a semisynthetic polysaccharide such as carboxymethyl cellulose; a mineral impalpable powder such as aluminum magnesium silicate, smectite, bentonite, hectorite, fumed silica, organic bentonite or organic hectorite, or alumina sol, and two or more of them may be used as mixed as the case requires. The blend ratio of the anti-settling agent is usually from 0.01 to 10.0 parts by weight, preferably from 0.1 to 5.0 parts by weight.

The defoaming agent may, for example, be a silicone defoaming agent containing polydimethylsiloxane as an active ingredient, or silica. Specifically, commercial products with tradenames of SILCOLAPSE 432 (manufactured by Bluestar silicones), SILFOAM SC 120 (manufactured by Wacker Asahikasei Silicone Co., Ltd.) and SAG 47, SAG 1538, SAG 1572 (manufactured by Momentive) may, for example, be mentioned, and as the case requires, they may be used as mixed with silica. The blend ratio of the defoaming agent is usually from 0.01 to 10 parts by weight, preferably from 0.1 to 2.0 parts by weight.

The solvent may, for example, be water, dioxane, acetone, isophorone, methyl isobutyl ketone, chlorobenzene, cyclohexane, dimethyl sulfoxide, dimethylformamide, dimethylacetamide, dimethyl C8-C12 amide, N-methyl-2-pyrrolidone, 2-ethylhexanol, γ-butyrolactone, an alcohol, acetic acid, butyric acid, lactic acid, isopropyl acetate, butyl acetate, dimethyl lactate, benzene, an alkylbenzene or an alkylnaphthalene, and two or more of them may be used as mixed as the case requires. The blend ratio of the solvent is usually from 0.1 to 30 parts by weight, preferably from 0.5 to 20 parts by weight.

The agrochemical oil-based suspension of the present invention may be produced in accordance with a conventional method in this technical field, and for example, a method in which a surfactant and an anti-settling agent or a stabilizer are added to the oil component and mixed, and then the agrochemical active ingredient is added, and as the case requires, other adjuvant is added, the mixture is preliminary ground e.g. by a homogenizer and pulverized to a predetermined particle size by a wet pulverizer with e.g. zircon beads, and an additive such as a thickener is added, followed by mixing, and a method in which the agrochemical active ingredient dry-pulverized together with an additive such as a surfactant, is added to an oil component in which a surfactant, an anti-settling agent and other adjuvant are dissolved, followed by preliminary grinding e.g. by a homogenizer, and the powder is pulverized to a predetermined particle size by a wet pulverizer with e.g. glass beads, and as the case requires, an adjuvant such as a thickener or a stabilizer is added, followed by mixing, may be mentioned. The agrochemical active ingredient is pulverized usually to a level of from 0.1 to 5 µm, and it is preferred to change the particle size depending upon the physical properties of the agrochemical active ingredient.

As a pulverizer which can be used in preparation of the agrochemical oil-based suspension of the present invention, a wet pulverizer such as a bead mill, a vibration mill or a planetary mill may be mentioned, and for example, Paint Shaker (manufactured by Toyo Seiki Seisaku-sho, Ltd.), Nanotaro (Nano Pulverizer) NP-100 (manufactured by THINKY CORPORATION), DYNO-MILL KD (manufactured by WAB), Ready Mill Model RMH (manufactured by AIMEX CO., LTD.), etc., may be used. The beads may, for example, be glass beads, zirconia beads, zircon beads, etc., may be used. The beads are preferably ones having a particle size within a range of from 0.01 to 1.5 mm, more preferably from 0.5 to 1.0 mm. By using beads having a small particle size, an agrochemical oil-based suspension with a small average particle size can be produced.

The average particle size of the agrochemical active ingredient may be measured, for example, by a laser diffraction particle size distribution measuring device such as MICROTRAC MT3300-EXII (manufactured by NIKKISO CO., LTD.) or Mastersizer 3000 (manufactured by Malvern). Measurement may be conducted, in the case of using MICROTRAC MT3300-EXII, by using a sample as dispersed in an organic solvent such as n-hexane.

The viscosity of the agrochemical oil-based suspension of the present invention may be measured, for example, by TVB-10 viscometer (manufactured by Toki Sangyo Co., Ltd.) or BrookField viscometer (manufactured by BrookField). Measurement may be conducted, in the case of using TVB-10 viscometer, at a sample liquid temperature of 20°C, at a number of revolutions of 60rpm, with rotor M2 or M3.

In the present invention, after the agrochemical oil-based suspension is filled in the resin-made agrochemical container, the air in a space in the container may be replaced with nitrogen by supplying a nitrogen gas from a device such as a cartridge nitrogen gas cylinder (manufactured by NaRiKa Corporation) to the space in the container. The container subjected to nitrogen replacement may be sealed with a device such as an induction liner (model DGF-500, manufactured by LANDS WORK corporation).

Preferred embodiments of the present invention will be described below.

[1] A method for preventing deformation of a resin-made agrochemical container filled with an agrochemical oil-based suspension, wherein the agrochemical oil-based suspension filled in the resin-made agrochemical container contains (1) an agrochemical active ingredient, (2) an oil component and (3) at least one antioxidant selected from the group consisting of a phenol derivative, a gallic acid ester and ethoxyquin.
[2] The method according to [1], wherein the antioxidant is at least one member selected from the group consisting of a phenol derivative and a gallic acid ester.
[3] The method according to [1] or [2], wherein the phenol derivative is at least one member selected from the group consisting of dibutylhydroxytoluene, butylhydroxyanisole, 2,5-di-tert-amylhydroquinone, 2,5-di-tert-butylhydroquinone, 4,4'-butylidenebis(6-tert-butyl-m-cresol), 4,4'-thiobis(6-tert-butyl-m-cresol) and bis(5-tert-butyl-4-hydroxy-2-methylphenyl)sulfide.
[4] The method according to [1] or [2], wherein the gallic acid ester is at least one member selected from the group consisting of methyl gallate, ethyl gallate, 2-hydroxyethyl gallate, propyl gallate, isopropyl gallate and butyl gallate.
[5] The method according to any one of [1] to [4], wherein the oil component is at least one member selected from the group consisting of a vegetable oil, an alkyl-esterified vegetable oil, a mineral oil and an aromatic oil.
[6] The method according to [5], wherein the vegetable oil or alkyl-esterified vegetable oil is at least one member selected from the group consisting of soybean oil, rapeseed oil, tall oil, olive oil, castor oil, papaya oil, camellia oil, coconut oil, palm oil, sesame oil, corn oil, rice bran oil, peanut oil, cottonseed oil, linseed oil, sunflower oil, neem oil and safflower oil, and an alkyl ester oil thereof.
[7] The method according to [5], wherein the mineral oil is at least one member selected from the group consisting of a machine oil, a paraffin oil and a naphthene oil.
[8] The method according to [5], wherein the aromatic oil is at least one member selected from the group consisting of solvent naphtha and xylene.
[9] The method according to any one of [1] to [4], wherein the oil component is a fatty acid glyceride.
[10] The method according to [9], wherein the fatty acid glyceride is a glyceride of at least one fatty acid selected from the group consisting of α-linolenic acid, linoleic acid, oleic acid, caprylic acid, capric acid, lauric acid, myristic acid, palmitic acid, palmitoleic acid, stearic acid, arachidic acid, eicosenoic acid, behenic acid, erucic acid, lignoceric acid, erucic acid and ricinoleic acid.
[11] The method according to [9] or [10], wherein the fatty acid glyceride is monoglyceride, diglyceride, triglyceride or a mixture thereof.
[12] The method according to any one of [1] to [11], wherein the weight ratio of the antioxidant to the oil component is from 0.01:99.99 to 15:85.
[13] The method according to any one of [1] to [12], wherein after the agrochemical oil-based suspension is filled in the resin-made agrochemical container, a gas in a space in the container is replaced with nitrogen gas.
[14] The method according to any one of [1] to [13], wherein the agrochemical active ingredient is nicosulfuron, flazasulfuron, tolpyralate, tiafenacil, mesotrione, atrazine, bromoxynil, terbuthylazine, acetochlor, metolachlor, chlorfluazuron, fosthiazate, flonicamid, cyclaniliprole, isofetamid, cyazofamid, pyriofenone or fluazinam.
[15] The method according to any one of [1] to [13], wherein the agrochemical active ingredient is at least one member selected from the group consisting of nicosulfuron and tolpyralate.
[16] An agrochemical oil-based suspension for preventing deformation of a resin-made agrochemical container, as defined in any one of [1] to [15].
[17] A method for preventing deformation of a resin-made agrochemical container, which comprises
   preparing an agrochemical oil-based suspension by mixing (1) an agrochemical active ingredient, (2) an oil component and (3) at least one antioxidant selected from the group consisting of a phenol derivative, a gallic acid ester and ethoxyquin, and
   filling a resin-made agrochemical container with the agrochemical oil-based suspension,
   to suppress pressure reduction in the resin-made agrochemical container caused by consumption of oxygen in the resin-made agrochemical container filled with the agrochemical oil-based suspension.
[18] The method according to [17], wherein the antioxidant is at least one member selected from the group consisting of a phenol derivative and a gallic acid ester.

### EXAMPLES

Now, the present invention will be described in detail with reference Examples, however, it should be understood that the present invention is not limited thereto. First, Formulation Examples are described.

### Formulation Examples

Components in amounts as identified in the following Table A are mixed and ground by homogenizer ULTRA-TURRAX T25basic (manufactured by IKA) to prepare an oil-based suspension. The numerical values in Table A represent parts by weight. The surfactants (c1) to (c7) as the component (c) in Table A are respectively identified in Table B, and commercial products in Table A are as follows.
"SAG47", tradename, silicone defoaming agent (manufactured by Momentive)
"Agnique ME 18RD-F", tradename, C16-18 saturated fatty acid and C18 unsaturated fatty acid methyl ester (manufactured by BASF)
"Corn Salad Oil", tradename, triacyl glycerol (manufactured by Boso oil and fat Co., Ltd.)

**Table A**

| Component | | Formulation Examples | | | |
|---|---|---|---|---|---|
| | | 1 | 2 | 3 | 4 |
| (a) | Tolpyralate | 12.0 | 3.0 | - | 10.0 |
| (b) | Nicosulfuron | 12.0 | 3.0 | 6.0 | - |
| (c) | (c)-1 | 10.5 | 12.0 | 10.0 | 3.0 |
| (c) | (c)-2 | 1.2 | - | 1.0 | - |
| (c) | (c)-3 | - | 5.0 | - | - |
| (c) | (c)-4 | - | - | 15.0 | - |
| (c) | (c)-5 | 3.0 | - | - | 10.0 |
| (c) | (c)-6 | 3.3 | - | 2.0 | - |
| (c) | (c)-7 | | 1.0 | - | 2.0 |
| (d) | Fumed silica | 3.0 | - | - | - |
| (e) | Organic bentonite | 1.5 | 1.0 | 1.0 | 1.0 |
| (f) | SAG47 | - | 0.5 | - | - |
| (g) | 2-ethylhexanol | - | - | 7.2 | - |
| (h) | Agnique ME 18RD-F | 54.7 | - | 65.4 | 72.0 |
| (h) | Corn Salad Oil | - | 70.5 | - | - |

**Table A (continued)**

| Component | | Formulation Examples | | | Comparative Example |
|---|---|---|---|---|---|
| | | 5 | 6 | 7 | 1 |
| (a)-2 | Flonicamid | 24.0 | - | - | - |
| (a)-3 | Atrazine | - | 24.0 | - | - |
| (a)-4 | Bromoxynil | - | - | 24.0 | - |
| (a)-5 | Glyphosate | - | - | - | 24.0 |
| (c) | (c)-1 | - | - | - | - |
| (c) | (c)-2 | 1.2 | 1.2 | 1.2 | 1.2 |
| (c) | (c)-3 | - | - | - | - |
| (c) | (c)-4 | - | - | - | - |
| (c) | (c)-5 | 3.0 | 3.0 | 3.0 | 3.0 |
| (c) | (c)-6 | 3.3 | 3.3 | 3.3 | 3.3 |
| (c) | (c)-7 | - | - | - | - |
| (d) | Fumed silica | 3.0 | 3.0 | 3.0 | 3.0 |
| (e) | Organic bentonite | 1.5 | 1.5 | 1.5 | 1.5 |
| (f) | SAG47 | - | - | - | - |
| (g) | 2-ethylhexanol | - | - | - | - |
| (h) | Agnique ME 18RD-F | 54.7 | 54.7 | 54.7 | 54.7 |
| (h) | Corn Salad Oil | - | - | - | - |

**Table B**

| | Component |
|---|---|
| (c)-1 | Polyoxyethylene sorbitan fatty acid ester |
| (c)-2 | Polyoxyethylene castor oil |
| (c)-3 | Polyoxyethylene allyl phenyl ether |
| (c)-4 | Polyoxyethylene alkylamine |
| (c)-5 | Polyoxyethylene alkyl ether |
| (c)-6 | Calcium alkylbenzene sulfonate |
| (c)-7 | Sodium alkylbenzene sulfonate |

Now, Test Examples are shown.

### Test Example 1

Oil-based suspensions containing an agrochemical active ingredient and oil-based suspensions containing no agrochemical active ingredient were prepared as follows.

### [Containing agrochemical active ingredient]

An agrochemical active ingredient (tolpyralate: 12.0 parts by weight, nicosulfuron: 12.0 parts by weight), 10.5 parts by weight of polyoxyethylene sorbitan fatty acid ester, 1.2 parts by weight of polyoxyethylene castor oil, 3.3 parts by weight of calcium alkylbenzene sulfonate, 1.5 parts by weight of organic bentonite, 3.0 parts by weight of polyoxyethylene monoalkyl ether and 3.0 parts by weight of fumed silica were mixed, and 54.7 parts by weight of Agnique ME18RD-F (tradename; C16-18 saturated fatty acid and C18 unsaturated fatty acid methyl ester, manufactured by BASF) was added to a volume of 1 L. The mixture was mixed and ground by homogenizer ULTRA-TURRAX T25basic (manufactured by IKA) and further pulverized so that the particle size of the agrochemical active ingredient became 5 µm or smaller by a bead mil to obtain an oil-based suspension.

### [Containing no agrochemical active ingredient]

6.2 parts by weight of polyoxyethylene sorbitan fatty acid ester, 0.7 parts by weight of polyoxyethylene castor oil, 1.9 parts by weight of calcium alkylbenzene sulfonate and 79.2 parts by weight of Agnique ME18RD-F (tradename; C16-18 saturated fatty acid and C18 unsaturated fatty acid methyl ester, manufactured by BASF) were mixed to a volume of 1 L, and the mixture was mixed and ground by homogenizer ULTRA-TURRAX T25 basic (manufactured by IKA) to obtain an oil-based suspension.

To each oil-based suspension, the antioxidant (dibutylhydroxytoluene or ascorbic acid) as identified in Table 1 was added and mixed to prepare a test sample, and 200 ml each was filled in a polyethylene bottle container (model: NSW-500-2(M) bottle, manufactured by TOHTO MOLDING CO., LTD) having a capacity of 500 ml. Before the bottle container was sealed by an induction liner, an oxygen concentration measuring chip was attached to a space, and with respect to some samples, a gas in a space in the bottle container was replaced with a nitrogen gas (cartridge laboratory gas (manufactured by NaRiKa Corporation)). Each bottle container was sealed by an induction liner (model DGF-500, manufactured by LANDS WORK corporation) and stored at room temperature for 863 days. After the storage, the outer appearance of the bottle container was examined based on the following standards, and the oxygen concentration in the bottle container was measured. The results are shown in Table 1.

Outer appearance of bottle container ○: no or very small change observed, ×: large dent observed on the body

**Table 1**

| Agrochemical active ingredient | Antioxidant | Amount added (parts by weight) | Outer appearance | Oxygen concentration after 863 days' storage |
|---|---|---|---|---|
| Contained | Dibutylhydroxytoluene (BHT) | 0.2 | ○ | 15.4% |
| | BHT+nitrogen replacement | 0.02 | ○ | 0.7% |
| | Ascorbic acid | 0.02 | × | 0.8% |
| Nil | Dibutylhydroxytoluene (BHT) | 0.2 | ○ | 13.2% |
| | | 0.02 | × | 1.5% |
| Contained | Not added | - | × | 1.2% |

It is found from the results in Test Example 1 that under long term storage conditions, by adding 0.2 parts by weight of the antioxidant of the present invention, deformation of the bottle container was suppressed. Deformation of the bottle container was suppressed also by replacing the air in the bottle container with nitrogen, in addition to adding 0.02 parts by weight of the antioxidant. Further, when the agrochemical active ingredient was contained in the product, the oxygen concentration was slightly higher.

### Test Example 2

In the same manner as in Test Example 1, an oil-based suspension was prepared, 0.01 parts by weight to 3.0 parts by weight of the antioxidant as identified in Table 2 was added, followed by mixing, and the outer appearance of the bottle container was observed and the oxygen concentration in the bottle container was measured. The results are shown in Table 2.

**Table 2**

| Agrochemical active ingredient | Antioxidant | Amount added (parts by weight) | Outer appearance | Oxygen concentration after 140 days' storage |
|---|---|---|---|---|
| Contained | Dibutylhydroxytoluene (BHT) | 3.0 | ○ | 14.7% |
| | | 0.2 | ○ | 13.2% |
| | | 0.1 | ○ | 13.9% |
| | | 0.01 | ○ | 10.3% |
| | Ascorbic acid | 3.0 | ○ | 7.2% |
| | | 0.2 | × | 0.16% |
| | | 0.1 | × | 0.23% |
| | | 0.01 | × | 0.14% |
| | Propyl gallate | 0.2 | ○ | 9.4% |
| | Ethoxyquin | 0.2 | ○ | 12.0% |
| | Nitrogen replacement | - | ○ | 0.19% |
| | Not added | - | × | 0.72% |
| Nil | Dibutylhydroxytoluene (BHT) | 3.0 | ○ | 9.4% |
| | | 0.2 | ○ | 7.7% |
| | | 0.1 | ○ | 5.2% |
| | | 0.01 | × | - |
| | Ascorbic acid | 3.0 | × | 0.29% |
| | | 0.2 | × | 0.28% |
| | | 0.1 | × | 0.23% |
| | | 0.01 | × | - |
| | Nitrogen replacement | - | ○ | 0.25% |
| | Not added | - | × | 0.77% |

It is found from the results in Test Example 2 that under long term storage conditions (140 days), by adding 0.01 to 3.0 parts by weight of dibutylhydroxytoluene, 0.2 parts by weight of propyl gallate or 0.2 parts by weight of ethoxyquin as the antioxidant of the present invention, deformation of the bottle container was suppressed, and the lipophilic antioxidant had a high suppressing effect as compared with the hydrophilic antioxidant such as ascorbic acid. Deformation of the bottle container was suppressed also by replacing the air in the bottle container with nitrogen. Further, when the agrochemical active ingredient was contained in the product, the oxygen concentration was higher and a higher effect of preventing deformation of the bottle container was obtained.

### Test Example 3

70 g of the oil-based suspension prepared in Test Example 2 was weighed in a 100 ml glass bottle and put in an aluminum laminated bag (manufactured by YANAGI, model: 0401, 12×22cm), the amount of the air inside the bag was adjusted so that the volume of the aluminum laminated bag would be from 400 to 430 ml, and the bag was sealed by a heat sealer (manufactured by FUJIIMPULSE CO., LTD. model: PS-310E) and stored at room temperature for 130 days. The change of the volume of the aluminum laminated bag was obtained by measuring the volume of water after the aluminum laminated bag was sunk in a 2 L graduated cylinder filled with 1.5 L of water. The results are shown in Table 3.

**Table 3**

| Agrochemical active ingredient | Antioxidant | Amount added (parts by weight) | Reduction (ml) |
|---|---|---|---|
| Contained | Dibutylhydroxytoluene (BHT) | 3.0 | 0 |
| | | 0.2 | 5 |
| | | 0.1 | 5 |
| | | 0.01 | 10 |
| | Ascorbic acid | 3.0 | 15 |
| | | 0.2 | 60 |
| | | 0.1 | 55 |
| | | 0.01 | 60 |
| | D-isoascorbic acid | 3.0 | 10 |
| | | 0.2 | 70 |
| | | 0.1 | 50 |
| | DL-α-tocopherol | 3.0 | 55 |
| | | 0.2 | 40 |
| | | 0.1 | 30 |
| | Propyl gallate | 3.0 | 10 |
| | | 0.2 | 10 |
| | | 0.1 | 20 |
| | Ethoxyquin | 3.0 | 5 |
| | | 0.2 | 5 |
| | | 0.1 | 5 |
| | Nitrogen replacement | - | 0 |
| | Not added | - | 60 |
| Nil | Dibutylhydroxytoluene (BHT) | 3.0 | 15 |
| | | 0.2 | 15 |
| | | 0.1 | 20 |
| | | 0.01 | 60 |
| | Ascorbic acid | 3.0 | 60 |
| | | 0.2 | 60 |
| | | 0.1 | 55 |
| | | 0.01 | 55 |
| | Nitrogen replacement | - | -5 |
| | Not added | - | 60 |

It is found from the results in Test Example 3 that under long term storage conditions (130 days at room temperature), by adding 0.01 to 3.0 parts by weight of dibutylhydroxytoluene, 0.2 to 3.0 parts by weight of propyl gallate or 0.1 to 3.0 parts by weight of ethoxyquin, deformation of the aluminum laminated bag was suppressed. On the other hand, when ascorbic acid or D-isoascorbic acid which is a hydrophilic antioxidant or tocopherol was added, the effect of suppressing deformation of the container was low. Deformation of the aluminum laminated bag was suppressed also by replacing the air in the bag with nitrogen. Further, when the agrochemical active ingredient was contained in the product, a higher effect of preventing deformation of the aluminum laminated bag was obtained.

### Test Example 4

In the same manner as in Test Example 1, oil-based suspensions were prepared by using the agrochemical active ingredient as identified in Table 4, 0.01 parts by weight to 0.2 parts by weight of dibutylhydroxytoluene was added, followed by mixing, and the bottle container was stored at 40°C for 28 days. To examine the state of the bottle container, the outside diameters (center portion and lower portion (2 cm from the bottom) of the bottle container were measured, and the outside diameter change ratio, CV value, was calculated from the following formula. The smaller the CV value, the smaller the deformation of the container and the higher the deformation preventing effect. The results are shown in Table 4. CV value= (standard deviation of container outside diameter/average of container outside diameter)×100

**Table 4**

| Agrochemical active ingredient | Amount of BHT added (parts by weight) | Outside diameter CV value | |
|---|---|---|---|
| | | Center portion | Lower portion |
| Tolpyralate 120 g/L | 0.2 | 0.32 | 0.57 |
| | 0.1 | 0.51 | 0.44 |
| +Nicosulfuron 120 g/L | 0.01 | 0.65 | 0.57 |
| | Not added | 2.26 | 3.25 |
| Flonicamid 240 g/L | 0.2 | 0.39 | 0.17 |
| | 0.1 | 0.31 | 0.30 |
| | 0.01 | 0.73 | 2.78 |
| | Not added | 1.16 | 3.09 |
| Atrazine 240 g/L | 0.2 | 0.33 | 0.45 |
| | 0.1 | 0.27 | 0.30 |
| | 0.01 | 3.18 | 5.42 |
| | Not added | 4.04 | 5.83 |
| Bromoxynil 240 g/L | 0.2 | 0.20 | 0.22 |
| | 0.1 | 0.62 | 0.49 |
| | 0.01 | 1.24 | 1.84 |
| | Not added | 1.38 | 3.10 |
| Glyphosate 240 g/L | 0.2 | 1.57 | 0.90 |
| | 0.1 | 2.25 | 4.51 |
| | 0.01 | 0.63 | 4.79 |
| | Not added | 0.46 | 1.15 |
| Nil | 0.2 | 0.50 | 0.56 |
| | 0.1 | 0.43 | 0.47 |
| | 0.01 | 2.33 | 2.83 |
| | Not added | 2.06 | 2.92 |

It is found from the results in Test Example 4 that with the products containing the agrochemical active ingredient other than glyphosate, deformation of the bottle container was suppressed when dibutylhydroxytoluene was added in an amount of 0.1 parts by weight or more per 100 mL of the sample.

The entire disclosure of Japanese Patent Application No. 2021-131666 filed on August 12, 2021 including specification, Claims and abstract is incorporated herein by reference in its entirety.

## Claims

1. A method for preventing deformation of a resin-made agrochemical container filled with an agrochemical oil-based suspension, wherein the agrochemical oil-based suspension filled in the resin-made agrochemical container contains (1) an agrochemical active ingredient, (2) an oil component and (3) at least one antioxidant selected from the group consisting of a phenol derivative, a gallic acid ester and ethoxyquin.

2. The method according to Claim 1, wherein the antioxidant is at least one member selected from the group consisting of a phenol derivative and a gallic acid ester.

3. The method according to Claim 1 or 2, wherein the antioxidant is a phenol derivative.

4. The method according to any one of Claims 1 to 3, wherein the phenol derivative is at least one member selected from the group consisting of dibutylhydroxytoluene, butylhydroxyanisole, 2,5-di-tert-amylhydroquinone, 2,5-di-tert-butylhydroquinone, 4,4'-butylidenebis(6-tert-butyl-m-cresol), 4,4'-thiobis(6-tert-butyl-m-cresol) and bis(5-tert-butyl-4-hydroxy-2-methylphenyl)sulfide.

5. The method according to any one of Claims 1 to 4, wherein the oil component is at least one member selected from the group consisting of a vegetable oil, an alkyl-esterified vegetable oil, a mineral oil and an aromatic oil.

6. The method according to any one of Claims 1 to 5, wherein the oil component is a fatty acid glyceride.

7. The method according to Claim 6, wherein the fatty acid glyceride is a glyceride of at least one fatty acid selected from the group consisting of α-linolenic acid, linoleic acid, oleic acid, caprylic acid, capric acid, lauric acid, myristic acid, palmitic acid, palmitoleic acid, stearic acid, arachidic acid, eicosenoic acid, behenic acid, erucic acid, lignoceric acid, erucic acid and ricinoleic acid.

8. The method according to Claim 6 or 7, wherein the fatty acid glyceride is a monoglyceride, a diglyceride, a triglyceride, or a mixture thereof.

9. The method according to any one of Claims 1 to 8, wherein the weight ratio of the antioxidant to the oil component is from 0.01:99.99 to 15:85.

10. The method according to any one of Claims 1 to 9, wherein after the resin-made agrochemical container is filled with the agrochemical oil-based suspension, a gas in a space in the container is replaced with a nitrogen gas.

11. An agrochemical oil-based suspension for preventing deformation of a resin-made agrochemical container, containing (1) an agrochemical active ingredient, (2) an oil component and (3) at least one antioxidant selected from the group consisting of a phenol derivative, a gallic acid ester and ethoxyquin, and having oxidation of the oil component which occurs in the resin-made agrochemical container filled with the agrochemical oil-based suspension suppressed.

12. The agrochemical oil-based suspension according to Claim 11, wherein the antioxidant is at least one member selected from the group consisting of a phenol derivative and a gallic acid ester.

13. A method for preventing deformation of a resin-made agrochemical container, which comprises:
preparing an agrochemical oil-based suspension by mixing (1) an agrochemical active ingredient, (2) an oil component and (3) at least one antioxidant selected from the group consisting of a phenol derivative, a gallic acid ester and ethoxyquin, and
filling a resin-made agrochemical container with the agrochemical oil-based suspension,
to suppress pressure reduction in the resin-made agrochemical container caused by consumption of oxygen in the resin-made agrochemical container filled with the agrochemical oil-based suspension.

14. The method according to Claim 13, wherein the antioxidant is at least one member selected from the group consisting of a phenol derivative and a gallic acid ester.

15. The method according to Claim 13 or 14, wherein after the resin-made agrochemical container is filled with the agrochemical oil-based suspension, a nitrogen gas is supplied to a space in the container.
